# EUROPÄISCHE PATENTSCHRIFT

(11) **EP 3 696 461 B1**
(45) Veröffentlichungstag und Bekanntmachung des Hinweises auf die Patenterteilung: **10.08.2022**
(21) Anmeldenummer: 20154696.7
(22) Anmeldetag: 30.01.2020
(51) Int. Cl.: F16P 3/14, F16P 3/18, G05B 9/02, G05B 19/406

(54) **SICHERUNGSVORRICHTUNG FÜR EINE MASCHINE UND BETRIEBSVERFAHREN**
SAFETY DEVICE FOR A MACHINE AND OPERATION METHOD
DISPOSITIF DE SÉCURISATION POUR UNE MACHINE ET PROCÉDÉ DE FONCTIONNEMENT

(30) Priorität: 12.02.2019 DE 102019103523
(43) Veröffentlichungstag der Anmeldung: 19.08.2020
(73) Patentinhaber: Q-tec Prüfgeräte GmbH, 84367 Zeilarn (DE)
(72) Erfinder: Rothenaicher, Otto, 84367 Zeilarn (DE)
(74) Vertreter: Hofstetter, Schurack & Partner

(56) Entgegenhaltungen:
- EP-A1- 1 905 573
- US-A- 5 921 367
- SIEMENS AG: "Zugangsüberwachung durch einen Lichtvorhang mit Zweihandbedienung und Not-Halt bis SIL 3 bzw. PL e mit einem Sicherheitsschaltgerät 3SK2", Internet, 19. September 2016 (2016-09-19), XP055692177, Gefunden im Internet: URL:https://support.industry.siemens.com/c s/document/109485648/zugangsüberwachung-du rch-einen-lichtvorhang-mit-zweihandbedienu ng-und-not-halt-bis-sil-3-bzw-pl-e-mit-ein em-sicherheitsschaltgerät-3sk2?dti=0&lc=de -AT [gefunden am 2020-05-06]

## Beschreibung

Die vorliegende Erfindung betrifft eine Sicherungsvorrichtung für eine Maschine. Insbesondere ist die Sicherungsvorrichtung als berührungslose Schutzeinrichtung ausgebildet. Darüber hinaus betrifft die vorliegende Erfindung ein entsprechendes Verfahren zum sicheren Betreiben einer Maschine.

Es gibt nach wie vor Maschinen und Anlagen, die eine manuelle Bedienung erfordern und damit eine erhebliche Gefährdung für die Bedienperson darstellen. Insbesondere handelt es sich dabei um Maschinen wie Misch-Walzwerke, Zerkleinerungsanlagen, Pressen etc. mit manueller Zufuhr (Speisung) bzw. Handhabung der Verarbeitungsprodukte an der Gefahrenstelle, die mit manuellen Schutzelementen und Messsensoren nicht geschützt werden können.

Die derzeit verwendeten Systeme bieten nur einen unzureichenden Schutz für die Bedienperson, da die Schutzelemente nicht zwischen Produkt und zu schützenden Elementen wie z. B. Hände von Bedienpersonen unterscheiden können. Zudem erschweren sie oftmals die Bedienung, da der Schutzraum keinen genau begrenzten und sichtbaren Auslösebereich hat (radiometrische Sensorik, Theremin-Oszillator usw.). Damit der Arbeitsbereich an der Maschine (z. B. Walzwerk) möglichst gering eingeschränkt und eine Fehlauslösung vermieden wird, ist ein exakter und für den Bediener sichtbarer Auslösepunkt im gesamten Zugriffsbereich erforderlich. Fehlauslösungen führen teilweise zu erheblichen Betriebsstörungen und/oder Produktschäden.

Bei bekannten Anlagen werden derzeit die Einzugsstellen so weit wie möglich mechanisch durch Abdeckungen geschützt. Bei den nicht abdeckbaren Bereichen werden Not-Aus-Elemente, wie Schalter, Bügel, Seilzug bzw. Knieschaltmatten, in Griff- bzw. Betätigungsnähe positioniert. Ein absoluter Eingriffsschutz ist mit diesen Elementen bisher nicht gegeben.

An Walzwerken wird ein Eingriffsschutz zum Teil mit einem Reflexionslichtvorhang realisiert, der mit Reflexionsarmbändern bzw. Reflexionsflächen auf den Händen ausgelöst wird. Diese Sicherheitseinrichtung wird an den jeweiligen Anlagen spezifisch montiert und löst bei Aktivierung an dieser Stelle aus. Voraussetzung ist, dass die Bedienperson die notwendigen reflektierenden Elemente an den zu schützenden Stellen anlegt. Die Anlage kann erst in Betrieb gesetzt werden, wenn die Funktion des Eingriffsschutzes getestet wurde.

Als weitere berührungslose Eingriffssicherung wird z. B. ein Theremin-Oszillator (DE 197 16 035 A1) in Verbindung mit einer Kreissäge genannt. Die Lage der Schnittlinie wird durch einen Laser angezeigt. Hier ist die Lage des Auslösepunkts für den Bediener nicht erkennbar.

Eine Alternative stellt ein UWB-Radarsensor zur Erkennung menschlichen Gewebes mit Anzeige eines Überwachungsbereichs dar (DE 10 2007 041 098 A1). Eine exakte räumliche Zuordnung von Auslösepunkt und Anzeigebereich ist auch hier nicht gegeben. Folglich ist mit Fehlauslösungen zu rechnen.

An Walzwerken ist die Überwachung des Eingriffsbereichs durch Transponder (elektromagnetisches Feld) bekannt (US 2014/0130645 A1, DE 39 37 684 A1). Auch hier ist eine Anpassung und Anzeige des Auslösefeldes nicht möglich und schränkt damit die Bedienung ein. Der Bediener hat nur eine Vermutung, wo das Auslösefeld verläuft. Wesentlich ist, dass die Bedienperson vor Auslösen des Abschalt-Alarms die Position des Auslöseelements zur Schutzbarriere erkennt, um Fehlauslösungen zu vermeiden und ein einfaches sicheres Handling zu ermöglichen.

Entsprechend der Druckschrift US 2006/0101960 A1 wird geprüft, ob ein Objekt im Schutzfeld vorhanden ist. Falls dies jedoch im Schutzfeld detektiert wird, ist es für eine Reaktion des Bedieners zu spät.

Ferner ist die Überwachung der korrekten Anwendung von angemessenen Arbeitsschutz-Elementen über handelsübliche Hochfrequenz-Transponder bekannt (DE 198 29 773 A1, EP 1 905 573 B1). Eine Überwachung der Funktionsfähigkeit der Arbeitsschutzelemente erfolgt durch die Prüfeinheit nicht.

Eine Sicherheitseinrichtung mit Hilfe von Elektrostatik- oder Lichtprojektoren, die Licht emittieren und erfassen können, ist in US 5 921 367 beschrieben. Auch bei dieser Einrichtung ist eine Eingriffswarnung, die vor dem tatsächlichen Eingriff erfolgt, nicht möglich.

Aus der Siemens-Produktbeschreibung "Zugangsüberwachung durch einen Lichtvorhang mit Zweihandbedienung und Not-Halt bis SIL 3 bzw. PL e mit einem Sicherheitsschaltgerät 3SK2", 19. September 2016 ist eine Sicherungsvorrichtung mit Lichtvorhang einschließlich einer Sende- und Empfangseinheit bekannt. Zur simultanen Betätigung ist ein Zweihandbedienpult vorgesehen.

Die Aufgabe der vorliegenden Erfindung besteht somit darin, die Bedienung einer Maschine sicherer gestalten zu können.

Erfindungsgemäß wird diese Aufgabe gelöst durch eine Sicherungsvorrichtung für eine Maschine, eine Maschine mit einer solchen Sicherungsvorrichtung und ein Verfahren zum Betreiben einer Maschine entsprechend den unabhängigen Patentansprüchen. Vorteilhafte Weiterbildungen der Erfindung ergeben sich aus den abhängigen Ansprüchen.

Erfindungsgemäß wird demnach bereitgestellt eine Sicherungsvorrichtung für eine Maschine, umfassend
- einen Lichtvorhang,
- eine erste und zweite Reflexionseinrichtung, die jeweils ausgebildet sind zum Reflektieren von Licht des Lichtvorhangs,
- ein erstes Identifikationselement integriert in die erste Reflexionseinrichtung und ein zweites Identifikationselement integriert in die zweite Reflexionseinrichtung,
- eine erste Sensoreinrichtung zum Auslesen einer ersten Identifikationsinformation des ersten Identifikationselements aus der ersten Reflexionseinrichtung,
- eine zweite Sensoreinrichtung zum Auslesen einer zweiten Identifikationsinformation des zweiten Identifikationselements aus der zweiten Reflexionseinrichtung und
- eine Steuereinrichtung zum Liefern eines Startsignals für die Maschine, nur wenn die erste Sensoreinrichtung die erste
Identifikationsinformation und gleichzeitig die zweite Sensoreinrichtung die zweite Identifikationsinformation auslesen, sowie zum Liefern eines Stoppsignals für die Maschine, sobald der Lichtvorhang sein von einer der Reflexionseinrichtungen reflektiertes Licht detektiert.

Die Sicherungsvorrichtung soll insbesondere als berührungslose Schutzeinrichtung, z. B. zum Personenschutz oder Eingriffsschutz bei Gefahrenstellen an Maschinen und Anlagen dienen. Für den berührungslosen Schutz soll ein Lichtvorhang dienen, der typischerweise aus einer Vielzahl linear nebeneinander angeordneter Reflexionslichtschranken realisiert wird. Zu der Sicherungsvorrichtung gehört außerdem eine erste und eine zweite Reflexionseinrichtung, die insbesondere für die beiden Arme einer Bedienperson vorgesehen sind. Sie sind speziell mit dem Licht des Lichtvorhangs abgestimmt. Vorzugsweise ist mit ihnen eine möglichst hohe Reflexion zu erreichen. Günstigerweise sind sie auch in der Lage, in möglichst viele Richtungen das Licht zu reflektieren.

Darüber hinaus ist vorgesehen, dass die Sicherungsvorrichtung ein erstes Identifikationselement und ein zweites Identifikationselement besitzt. Das erste Identifikationselement ist in die erste Reflexionseinrichtung integriert und das zweite Identifikationselement in die zweite Reflexionseinrichtung. Diese Identifikationselemente tragen Identifikationsinformation, sodass die Reflexionseinrichtungen mehr oder weniger genau identifiziert werden können. Gegebenenfalls können die Identifikationselemente bzw. Identifikationsinformationen auch unterschiedlich sein, damit die beiden Reflexionseinrichtungen voneinander unterschieden werden können.

Die Sicherungsvorrichtung besitzt korrespondierende Sensoreinrichtungen. Eine erste Sensoreinrichtung dient zum Auslesen der ersten Identifikationsinformation des ersten Identifikationselements aus der ersten Reflexionseinrichtung. In ähnlicher Weise dient die zweite Sensoreinrichtung zum Auslesen der zweiten Identifikationsinformation des zweiten Identifikationselements aus der zweiten Reflexionseinrichtung. Die beiden Sensoreinrichtungen können gleichen Typs sein. Das Auslesen kann insbesondere berührungslos, und zwar induktiv, kapazitiv, elektromagnetisch oder optisch erfolgen. Beispielsweise kann das Identifikationselement ein Barcode oder ein QR-Code sein, welche optisch gelesen werden können.

Darüber hinaus besitzt die Sicherungsvorrichtung eine Steuereinrichtung zum Liefern eines Startsignals und eines Stoppsignals für die Maschine. Das Startsignal wird nur dann geliefert, wenn die erste Sensoreinrichtung die erste Identifikationsinformation und gleichzeitig die zweite Sensoreinrichtung die zweite Identifikationsinformation auslesen. Die Steuereinrichtung liefert also kein Startsignal, wenn die Sensoreinrichtungen keine Identifikationsinformation lesen können, oder wenn nur eine Sensoreinrichtung eine Identifikationsinformation ausliest. Es ist wichtig, dass beide Sensoreinrichtungen gleichzeitig jeweils eine Identifikationsinformation auslesen, damit beispielsweise sichergestellt werden kann, dass ein Bediener die beiden Reflexionseinrichtungen gleichzeitig an beiden Armen trägt. Würde er die Reflexionseinrichtung nur an einem Arm tragen, so wäre die Gefahr groß, dass er sich mit dem anderen Arm an der Maschine verletzt.

Darüber hinaus ist die Steuereinrichtung dazu ausgelegt, ein Stoppsignal für die Maschine zu liefern, sobald der Lichtvorhang das von einer der Reflexionseinrichtungen reflektierte Licht detektiert (im vorliegenden Dokument bedeutet "Licht detektieren", dass die Intensität des Lichts eine vorgegebene Schwelle überschreiten muss, damit es detektiert werden kann). Wird also das Licht des Lichtvorhangs durch mindestens eine der Reflexionseinrichtungen zu einem oder mehreren Empfängern des Lichtvorhangs zurückreflektiert, bedeutet dies, dass die betreffende Reflexionseinrichtung in den überwachten Bereich des Lichtvorhangs eingedrungen ist. Damit besteht Verletzungsgefahr und die Maschine sollte sofort gestoppt werden. Daher wird ein entsprechendes Stoppsignal von der Steuereinrichtung generiert.

In vorteilhafter Weise kann die Maschine durch die Sicherungsvorrichtung also sehr sicher betrieben werden. Zum einen wird sie nur gestartet, wenn zwei vorgegebene Reflexionseinrichtungen verwendet und identifiziert werden. Zum anderen kann sie sicher abgeschaltet werden, wenn eine dieser identifizierten Reflexionseinrichtungen in den durch den Lichtvorhang geschützten Bereich eintaucht.

In einer vorteilhaften Ausgestaltung ist vorgesehen, dass von der Steuereinrichtung das Startsignal nur geliefert wird, wenn die erste und zweite Identifikationsinformation jeweils einer vorgegebenen Referenzinformation entspricht. Dies kommt einer Erhöhung der Sicherheitsanforderung gegenüber dem Fall gleich, dass nur das Vorhandensein von beliebigen Reflexionseinrichtungen überprüft wird. Entsprechend dieser erhöhten Sicherheitsanforderung kann vorgeschrieben sein, dass nur ganz bestimmte Reflexionseinrichtungen im Zusammenhang mit der Maschine verwendet werden dürfen. Dies bedeutet umgekehrt, dass mit bestimmten Reflexionseinrichtungen auch nur eine oder mehrere vorgegebene Typen von Maschinen bedient werden können. Beispielsweise können vorgegebene Reflexionseinrichtungen für einen Walzentyp verwendet werden, aber nicht für einen anderen Walzentyp. Darüber hinaus kann auch vorgesehen sein, dass bestimmte Reflexionseinrichtungen beispielsweise für eine Walze verwendet werden können, aber nicht für eine Presse. Somit kann die Sicherheit beim Bedienen von Maschinen entsprechend maschinenspezifisch hoch gehalten werden.

Entsprechend einer weiteren Ausgestaltung der Sicherheitsvorrichtung ist eine Linienlasereinrichtung mit ihrer Strahlrichtung parallel zum Lichtvorhang ausgerichtet. Vorzugsweise ist die Linienlasereinrichtung so ausgerichtet, dass eine Laserlinie eine Kante des Lichtvorhangs markiert. Die Linienlasereinrichtung strahlt Licht im optisch sichtbaren Bereich ab. Auf diese Weise kann der Bediener mühelos den Beginn des vom Lichtvorhang überwachten Bereichs (Sicherheitsbereich) erkennen.

Bei einer weiteren Ausgestaltung ist vorgesehen, dass die erste und zweite Reflexionseinrichtung jeweils ausgebildet sind zum Tragen an einer Extremität einer Bedienperson der Maschine. Insbesondere können die Reflexionseinrichtungen an den Händen, Armen, Beinen oder Füßen der Bedienperson getragen werden. Hierdurch ist es möglich, dass diese Extremitäten der Bedienperson vor der Maschine geschützt werden. Insbesondere sollen in der Regel die Hände vor einem Eingriff in die Maschine geschützt werden. Insofern ist es wichtig, dass die Reflexionseinrichtung möglichst leicht ist und die Bedienperson bei ihrer Arbeit nicht behindert. Darüber hinaus sollten die Reflexionseinrichtungen auch nicht übermäßig voluminös sein.

Vorzugsweise sind die Reflexionseinrichtungen jeweils als Handschuh, Fingerring oder Armband ausgebildet. Sie können also beispielsweise als textiles Gewebe mit einer Reflexionsschicht bzw. einer Reflexionsfolie realisiert sein. Derartige "Wearables" können leicht getragen werden und behindern die Bedienperson in der Regel nicht. Im vorliegenden Fall muss die Bedienperson dann beispielsweise an beiden Händen die Handschuhe oder an beiden Armen die Armbänder tragen.

Eine zusätzliche Sicherheit kann dadurch erreicht werden, dass überprüft wird, ob die Handschuhe oder Armbänder oder Fingerringe auch tatsächlich getragen werden. Aus diesem Grund kann vorgesehen sein, dass jeder Handschuh oder jedes Armband oder jeder Fingerring jeweils mit einem Dehnungssensor oder Zugsensor ausgestattet ist, deren Signale für die Steuereinrichtung ebenfalls notwendige Bedingung sind, damit das Startsignal geliefert wird. Erst wenn nämlich der Handschuh oder das Armband getragen wird, dehnt sich der Handschuh bzw. das Armband entsprechend aus und damit auch der integrierte Dehnungs- bzw. Zugsensor. Alternativ kann in den Handschuh oder das Armband auch ein Pulsmesser (Puls-Tracker) oder Venendetektor integriert sein. Folglich resultiert beim Tragen des Handschuhs bzw. Armbands ein korrespondierendes Sensorsignal, das von der Steuereinrichtung mit ausgewertet werden kann. Es genügt also nicht, die Handschuhe oder die Armbänder einfach an die jeweiligen Sensoreinrichtungen zu halten und dann ohne diese Textilien weiterzuarbeiten. Vielmehr müssen diese auch tatsächlich getragen werden. Die Steuereinrichtung liefert also nur dann ein Startsignal, wenn die Handschuhe bzw. Armbänder gleichzeitig an den Sensoreinrichtungen detektiert werden und zudem die entsprechenden Dehnungssignale oder Zugsignale der Steuereinrichtung vorliegen.

Entsprechend einer weiteren Ausführungsform der vorliegenden Erfindung kann vorgesehen sein, dass der Lichtvorhang mit Infrarottechnik realisiert ist und die Reflexionseinrichtungen darauf abgestimmt sind. In diesem Fall umfasst der Lichtvorhang eine Leiste mit Infrarot-Reflexionslichtschranken. Infrarotes Licht wird von den linear angeordneten Sendern ausgesandt und von den Infrarotempfängern wird reflektiertes Licht detektiert. Infrarotes Licht eignet sich deswegen sehr gut, weil es von vielen Werkstoffen wenig reflektiert wird, aber umso mehr von Reflexionseinrichtungen, die speziell für das Infrarotlicht ausgelegt sind. Speziell können Handschuhe oder Armbänder mit Materialien versehen sein, die infrarotes Licht in hohem Maße reflektieren. Somit kann mit großer Sicherheit erkannt werden, wenn sich beispielsweise eine derartige Reflexionseinrichtung in den Lichtvorhang bewegt.

Des Weiteren kann die Sicherungsvorrichtung so ausgebildet sein, dass unmittelbar neben der ersten Sensoreinrichtung eine dritte Sensoreinrichtung zum Überprüfen einer Reflexionsfähigkeit der ersten Reflexionseinrichtung und unmittelbar neben der zweiten Sensoreinrichtung eine vierte Sensoreinrichtung zum Überprüfen einer Reflexionsfähigkeit der zweiten Reflexionseinrichtung angeordnet ist. Insbesondere kann die dritte und vierte Sensoreinrichtung also beispielsweise feststellen, dass der Reflexionsgrad eines Reflexionshandschuhs aufgrund von Verschmutzung oder Alterung abgenommen hat. In diesem Fall kann die Sicherheit dadurch erhöht werden, dass die Maschine nicht eingeschaltet wird, wenn die Bedienperson diese verschmutzten bzw. gealterten Reflexionshandschuhe trägt. Es wird also nicht nur die Identität der Reflexionseinrichtungen überprüft, sondern gleichzeitig auch deren Qualität hinsichtlich ihres Reflexionsvermögens. Speziell im Infrarotbereich kann die Überprüfung der Reflexionsfähigkeit ohnehin nur maschinell erfolgen. Die erste und die dritte Sensoreinrichtung können in einem gemeinsamen Gehäuse integriert sein. Ebenso können auch die zweite und die vierte Sensoreinrichtung in einem weiteren gemeinsamen Gehäuse integriert sein.

Darüber hinaus kann die Sicherungsvorrichtung dadurch weiterentwickelt werden, dass die erste Sensoreinrichtung, die zweite Sensoreinrichtung, das erste Identifikationselement und das zweite Identifikationselement auf RFID-Technologie basieren. Mit der RFID-Technologie kann eine zuverlässige, berührungslose Identifikation durchgeführt werden. Die jeweilige Sensoreinrichtung stößt das betreffende Identifikationselement mit einem elektromagnetischen Impuls an, damit dieses die eigene Identifikationsinformation elektromagnetisch zurücksendet.

In einer optionalen Ausgestaltung ist vorgesehen, dass von der Steuereinrichtung jedes Detektionsereignis des Lichtvorhangs zählbar ist und ein entsprechendes Zählergebnis bei dem Liefern des Startsignals berücksichtigt wird. Es wird also beispielsweise jedes Ereignis gezählt, wenn ein Reflexionsarmband von dem Lichtvorhang detektiert wird. Auf diese Weise kann sichergestellt werden, dass das Reflexionsarmband nicht beliebig lange verwendet wird. Somit wäre es nicht zwangsläufig notwendig, das Reflexionsvermögen des Reflexionsarmbands spezifisch zu untersuchen. Vielmehr geht man in diesem Fall davon aus, dass das Reflexionsarmband bzw. die entsprechende Reflexionseinrichtung bei einer vorgegebenen Anzahl an Einsätzen sicher genutzt werden kann. Bei mehr Einsätzen könnte es aufgrund von Alterung oder Verschmutzung zu Unsicherheiten kommen.

Erfindungsgemäß kann auch eine Maschine bereitgestellt werden, die eine der oben genannten Sicherungsvorrichtungen aufweist. Dabei wird ein Schutzbereich der Maschine durch den Lichtvorhang überwacht. Die Maschine kann also mittels der Reflexionseinrichtungen, der Sensoreinrichtungen und der Steuereinrichtung sicher betrieben werden.

Speziell kann die Maschine die erste und zweite Sensoreinrichtung derart angeordnet haben, dass sie mindestens 20 cm, vorzugsweise mindestens 50 cm, voneinander entfernt sind. Beispielsweise sind die beiden Sensoreinrichtungen 80 cm oder 1 m voneinander entfernt, sodass eine Bedienperson, die Reflexionshandschuhe als Reflexionseinrichtungen trägt, diese an beiden Händen tragend bequem links und rechts vom Körper an die Sensoreinrichtungen halten kann. Mit dieser deutlichen räumlichen Distanz kann sichergestellt werden, dass nicht beide Sensoreinrichtungen eine einzige Reflexionseinrichtung, z. B. ein einziges Reflexionsarmband, detektieren bzw. identifizieren können.

Des Weiteren ist es günstig, wenn der Schutzbereich der Maschine an einer betriebsmäßig vorgesehenen Bedienerseite durch einen Linienlaser mit sichtbarem Licht kenntlich gemacht ist. Da häufig der Lichtvorhang auf Infrarotlicht-Basis konstruiert ist, ist es für die Bedienperson ohne Hilfsmittel nicht möglich, den Schutzbereich der Maschine, der von dem Lichtvorhang überwacht wird, zu erkennen. Falls jedoch die Maschine versehentlich aufgrund eines Eingriffs in den Schutzbereich ausgeschaltet wird, kommt es zu Produktionsausfällen und gegebenenfalls auch zu Produktschäden. Um dem vorzubeugen, ist es von Vorteil, den Schutzbereich genau kenntlich zu machen. Dies gelingt besonders gut durch einen Linienlaser, wenn sein Linienlicht parallel zum Lichtvorhang verläuft. Speziell sollte die Ebene, die das Linienlicht überstreicht, in etwa identisch mit der Seite des Lichtvorhangs sein, die der Bedienperson zugewandt ist. Somit kann die Bedienperson jederzeit und insbesondere auch in jeder Höhe erkennen, wo der Lichtvorhang verläuft. Gegebenenfalls verläuft das Linienlicht des Linienlasers auch in einem vorgegebenen Abstand zu dem Lichtvorhang.

Speziell kann vorgesehen sein, dass es sich bei der Maschine um eine Walzmaschine, eine Stanzmaschine, eine Pressmaschine oder eine Werkzeugmaschine handelt. Gegebenenfalls kann die Maschine aber auch eine beliebige andere Arbeits- oder Produktionsmaschine und insbesondere auch eine Förderanlage umfassen. Gerade bei Arbeits- oder Produktionsmaschinen, die unmittelbar von einer Bedienperson bedient werden, kann es aus Sicherheitsgründen von Vorteil sein, die erfindungsgemäße Sicherungsvorrichtung an der Mensch-Maschine-Schnittstelle zu implementieren.

Die oben genannte Aufgabe wird entsprechend der vorliegenden Erfindung auch gelöst durch ein Verfahren zum Betreiben einer Maschine durch
- Beleuchten eines Rands eines Schutzbereichs der Maschine mit Lichtvorhang,
- Bereitstellen einer ersten Reflexionseinrichtung und einer zweiten Reflexionseinrichtung, wobei
- ein erstes Identifikationselement in die erste Reflexionseinrichtung und ein zweites Identifikationselement in die zweite Reflexionseinrichtung integriert sind,
- Auslesen einer ersten Identifikationsinformation des ersten Identifikationselements aus der ersten Reflexionseinrichtung durch eine erste Sensoreinrichtung,
- Auslesen einer zweiten Identifikationsinformation des zweiten Identifikationselements aus der zweiten Reflexionseinrichtung durch eine von der ersten Sensoreinrichtung verschiedene zweite Sensoreinrichtung,
- Detektieren von Licht des Lichtvorhangs nach einer Reflexion an einer der Reflexionseinrichtungen und
- Liefern eines Startsignals für die Maschine, nur wenn das Auslesen der ersten Identifikationsinformation und das Auslesen der zweiten Identifikationsinformation gleichzeitig erfolgen und/oder
- Liefern eines Stoppsignals für die Maschine, sobald das Detektieren des Lichts erfolgt.

Die im Zusammenhang mit der erfindungsgemäßen Sicherungsvorrichtung bzw. der entsprechenden Maschine genannten Vorteile und Weiterbildungsmöglichkeiten können analog auch bei dem erfindungsgemäßen Verfahren realisiert werden. Dies bedeutet, dass die Merkmale der Sicherungsvorrichtung als entsprechende funktionelle Merkmale des erfindungsgemäßen Verfahrens implementiert werden können.

Die vorliegende Erfindung wird nun anhand der beigefügten Zeichnungen näher erläutert, in denen zeigen:
- Fig. 1: eine Walzmaschine mit Sicherheitsvorrichtung in einer Startphase;
- Fig. 2: eine Detailansicht der Walzmaschine in einer Betriebsphase;
- Fig. 3: eine Detailansicht der Walzmaschine in einer anderen Betriebsphase; und
- Fig. 4: eine Stanzmaschine mit erfindungsgemäßer Sicherungsvorrichtung.

Die nachfolgend näher geschilderten Ausführungsbeispiele stellen bevorzugte Ausführungsformen der vorliegenden Erfindung dar.

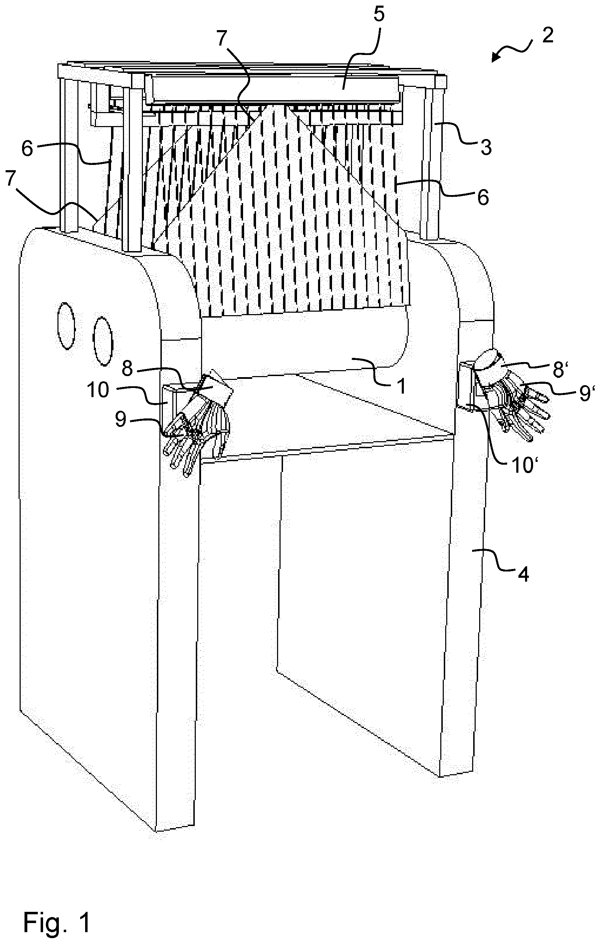

Die in Fig. 1 dargestellte Walzmaschine besitzt im vorliegenden Fall zwei Walzen 1. Eine nicht dargestellte Bedienperson kann von oben zwischen diese Walzen 1 Walzgut einführen. Damit die Bedienperson und insbesondere ihre Hände nicht gefährdet sind, besitzt die Walzmaschine eine Sicherungsvorrichtung 2. Diese befindet sich insbesondere über dem Walzenspalt, sodass dieser Bereich um den Walzenspalt gesichert werden kann (Sicherheitsbereich). Die Sicherungsvorrichtung 2 besitzt beispielsweise ein Gestell 3, das als quaderförmges Rahmengestell realisiert sein kann. Das Gestell 3 ist vorzugsweise auf einem Gehäuse 4 der Walzenmaschine angeordnet.

Die Sicherungsvorrichtung 2 besitzt einen Lichtvorhang 5, der an dem Gestell 3 insbesondere parallel zu den Walzen 1 befestigt sein kann. Der Lichtvorhang 5 besitzt typischerweise eine lineare Anordnung von zahlreichen Reflexionslichtschranken. Günstigerweise werden diese im Infrarotbereich des Lichts betrieben. Die Lichtquellen dieser Reflexionslichtschranken liefern vorzugsweise im eingeschalteten Zustand parallele Lichtstrahlen 6, die möglichst wenig divergieren. Durch die Vielzahl gleicher paralleler linear versetzter Lichtstrahlen 6 ergibt sich ein vorhangähnliches Strahlungsfeld. Gerät ein reflektierendes Objekt in dieses vorhangähnliche Strahlungsfeld, wird das Licht an einen oder mehrere Empfänger des Lichtvorhangs 5 zurückreflektiert und es kann ein entsprechendes Detektionssignal gewonnen werden. Dieses Detektionssignal lässt sich beispielsweise in einer Steuereinrichtung, welche in das Gehäuse 4 der Walzmaschine integriert sein kann, nutzen, um die Walzmaschine auszuschalten.

Im vorliegenden Beispiel besitzt die Walzmaschine auch an der in Fig. 1 hinteren Walze (in der Figur nicht sichtbar) einen gleichartigen Lichtvorhang 5, der ebenfalls Strahlen 6 produziert.

Da der Lichtvorhang in der Regel auf Infrarottechnologie basiert, kann das Strahlungsfeld von der Bedienperson nicht wahrgenommen werden. Aus diesem Grund ist die Sicherungsvorrichtung 2 hier zusätzlich mit einer Linienlasereinrichtung ausgestattet, die in den Lichtvorhang 5 integriert sein kann. Diese Linienlasereinrichtung generiert im Betrieb ein Laserstrahlungsfeld 7, das beim Auftreffen auf ein Objekt eine Laserlinie ergibt. Günstigerweise verläuft dieser Laservorhang, d.h. das Laserstrahlungsfeld 7 exakt parallel zu dem Lichtvorhang 5 mit den Strahlen 6. Ein gleichartiger Laservorhang 7 kann sich wiederum auf der Rückseite der Walzmaschine befinden, sofern eben eine Bedienung der Walzmaschine auch von der Rückseite möglich ist.

Zu der Sicherungsvorrichtung 2 gehören auch zwei Reflexionseinrichtungen 8 und 8', die hier jeweils die Form eines Armbands besitzen. Zur Orientierung sind in Fig. 1 auch die Hände 9 und 9' einer Bedienperson eingezeichnet, um die Trageposition der Reflexionseinrichtungen 8, 8' besser zu verstehen. Die Reflexionseinrichtungen 8, 8' besitzen jeweils ein Identifikationselement mit einer Identifikationsinformation. Bei dem Identifikationselement handelt es sich vorzugsweise um ein RFID-Element, oder aber auch um ein anderes, codetragendes Element wie etwa einen QR-Code oder Barcode.

Die Sicherungsvorrichtung besitzt außerdem zwei Sensoreinrichtungen 10 und 10'. Beide Sensoreinrichtungen sind hier an dem Gehäuse 4 der Walzmaschine an der vorderen Bedienseite befestigt. Die erste Sensoreinrichtung 10 an einem linken Schenkel des Gehäuses 4 und die zweite Sensoreinrichtung 10' an einem rechten Schenkel des Gehäuses 4. Die erste Sensoreinrichtung 10 kann eine erste Identifikationsinformation des ersten Identifikationselements aus der ersten Reflexionseinrichtung 8 und die zweite Sensoreinrichtung 10' eine zweite Identifikationsinformation des zweiten Identifikationselements aus der zweiten Reflexionseinrichtung 8' auslesen. Nur wenn beide Identifikationsinformationen von beiden Reflexionseinrichtungen 8 und 8' gleichzeitig ausgelesen werden, stellt dies die Steuereinrichtung der Maschine und insbesondere der Walzmaschine fest, sodass die Steuereinrichtung ein Startsignal für die Maschine erzeugen kann. Damit können die Walzen 1 zu laufen beginnen. Auf diese Weise lässt sich sicherstellen, dass die Bedienperson die Reflexionseinrichtungen 8 bzw. 8' gleichzeitig trägt, wenn sie die Maschine bedient.

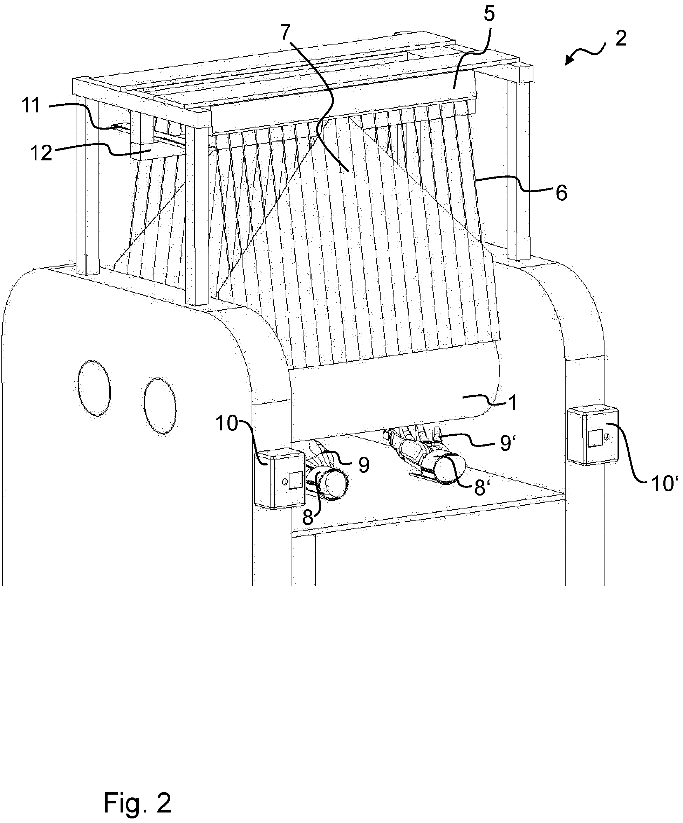

Fig. 2 zeigt eine Bedienphase der Walzmaschine, während sie läuft. Die Bedienperson greift unter die Walze 1, was durch die beiden Hände 9 und 9' symbolisiert ist. Dieser Bereich unter der Walze 1 ist unkritisch und wird daher nicht von der Sicherungsvorrichtung 2 bzw. dem Lichtvorhang 5 mit den Strahlen 6 überwacht. In dieser Position kann die Bedienperson beispielsweise gewalztes Gut aus der Walzmaschine entnehmen.

Die Sicherungsvorrichtung 2 besitzt im vorliegenden Beispiel ein plättchenförmiges Reflektorelement 11 auf einem Linearschlitten 12, der parallel zu den Lichtvorhängen 5 verläuft. Das Reflektorelement 11 ist entlang des Linearschlittens 12 verfahrbar. Es reflektiert das Infrarotlicht des Lichtvorhangs 5. Damit kann es vor Maschinenstart zur Prüfung des Lichtvorhangs 5 dienen.

Der Lichtvorhang 5 bzw. sein Strahlenfeld mit den Strahlen 6 ist hier etwas nach außen geneigt. Die Ausrichtung des Lichtvorhangs 5 kann aber beliebig gewählt werden. Gegebenenfalls kann er auch senkrecht oder nach innen geneigt sein. Von besonderem Vorteil ist jedoch, wenn das Linienlaser- bzw. Laserstrahlenfeld 7 möglichst parallel zu dem Strahlenfeld des Lichtvorhangs 5 verläuft. Damit kann das sichtbare Licht des Laserstrahlenfelds 7 der Bedienperson stets die Position des an sich unsichtbaren Strahlenfelds des Lichtvorhangs 5 kenntlich machen.

Die Sensoreinrichtungen 10, 10' können jeweils kombinierte Sensoreinrichtungen (erste und dritte Sensoreinrichtungen bzw. zweite und vierte Sensoreinrichtungen) sein, mit denen nicht nur die jeweiligen Identifikationsinformationen der Reflexionseinrichtungen 8, 8' ausgelesen, sondern auch die Reflexionsfähigkeiten (Intensität eines reflektierten Signals) der Reflexionseinrichtungen 8, 8' gemessen werden können. In Fig. 2 ist diese Kombinationssensorik dadurch angedeutet, dass jedes Gehäuse der Sensoreinrichtungen 10, 10' zwei Fenster besitzt.

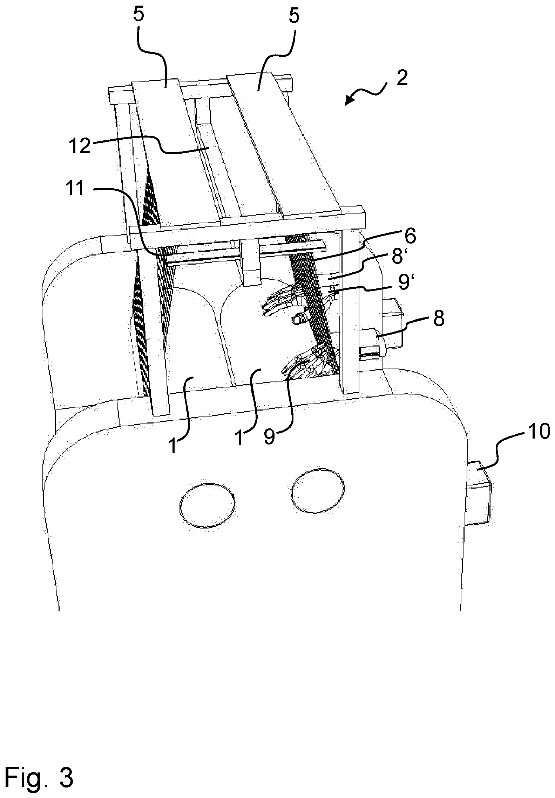

Fig. 3 zeigt eine weitere Betriebsphase der Walzmaschine. Die Bedienperson muss hier in einen Sicherheitsbereich oberhalb der Walzen 1 greifen, um beispielsweise eine Walzpuppe in die Walzmaschine einzulegen. Der Sicherheitsbereich ist nach unten durch die Walzen 1 und seitlich durch die Strahlenfelder der Lichtvorhänge 5, welche durch die Strahlen 6 kenntlich gemacht sind, begrenzt. Wie aus Fig. 3 hervorgeht, greifen die Finger der Bedienperson bereits durch das Strahlenfeld des Lichtvorhangs 5. Dies ist jedoch noch eine unkritische Situation, da die Finger von den Walzen 1 noch nicht erfasst werden können. Die Finger bzw. die Hände der Bedienperson reflektieren das Infrarotlicht kaum, sodass der Lichtvorhang 5 nicht auf das Durchdringen der Finger durch das Strahlenfeld reagiert. Die Bedienperson trägt jedoch an den Handgelenken hier jeweils Armbänder 8 bzw. 8'. Diese reflektieren das Infrarotlicht markant, sodass der Lichtvorhang 5 deren Eindringen in den Sicherheitsbereich registrieren würde. Damit die Bedienperson besser erkennen kann, wann die Armbänder 8, 8' den Sicherheitsbereich bzw. das Strahlenfeld des Lichtvorhangs 5 erreichen, markiert der in Fig. 3 nicht eingezeichnete Linienlaser (Linienlaserfeld 7; vgl. Fig. 1 und 2) die Durchbruchkante der Hände 9, 9' durch das Strahlenfeld des Lichtvorhangs 5.

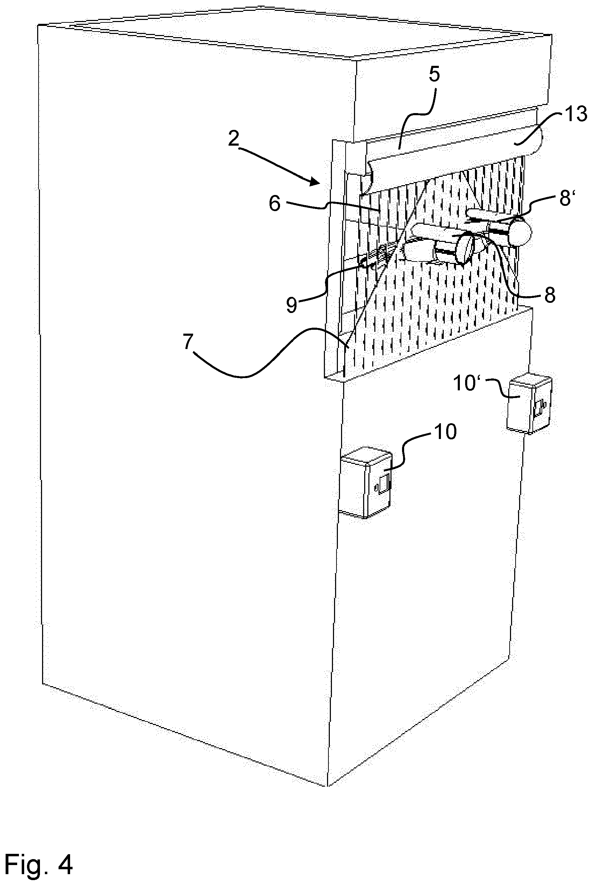

Fig. 4 zeigt ein weiteres Ausführungsbeispiel für die erfindungsgemäße Sicherungsvorrichtung 2. Sie ist hier in eine Presse bzw. Pressmaschine, insbesondere deren Bedienportal, integriert. Das Bedienportal wird durch den Lichtvorhang 5 mit seinen Strahlen 6 "verschlossen". Parallel zu dem Strahlungsfeld des Lichtvorhangs 5 verläuft hier ebenfalls das vorhangähnliche Linienlaserfeld 7. Beide Felder sind vorzugsweise wieder deckungsgleich, sodass das Linienlaserfeld 7 das Strahlungsfeld des Lichtvorhangs 5 optisch kenntlich macht. Greift die Bedienperson mit ihren Händen 9 in den Lichtvorhang 5, ohne dass die infrarotlichtreflektierenden Reflexionsarmbänder 8, 8' in den Lichtvorhang 5 dringen, so läuft die Presse weiter. Andernfalls, wenn die Reflexionseinrichtungen bzw. Reflexionsarmbänder 8, 8' in den Lichtvorhang 5 eindringen, stoppt die Presse sofort. Zur Überprüfung der Funktionsfähigkeit des Lichtvorhangs besitzt die Sicherungseinrichtung hier ein Einklapp-Reflexelement 13. Bei eingeklappten Reflexelement können sämtliche Reflexionslichtschranken des Lichtvorhangs 5 zu Beginn des Betriebs überprüft werden.

Entsprechend der vorliegenden Erfindung kann somit in einem konkreten Ausführungsbeispiel ein Eingriffsschutz auf Basis eines unsichtbaren Reflexionslichtvorhangs bereitgestellt werden, der eine unbeabsichtigte Auslösung durch den nicht sicher erkennbaren Auslösebereich des Schutzfelds bzw. Schutzbereichs vermeidet und die richtige Verwendung der Auslöseelemente wie Reflexionsarmbänder, Reflexionshandschuhe usw. (Reflexionseinrichtungen) sicherstellt. Die Sichtbarkeit des Schutz- bzw. Auslösebereichs wird durch die Integration eines Linienlasers mit einer Laser-Projektionslinie realisiert, die identisch zur Auslösefunktion des Lichtvorhangs verläuft. Die maximale Abweichung beträgt über das gesamte Überwachungsfeld beispielsweise nur wenige Millimeter (z.B. 5 mm oder 1 mm-Bereiche je nach Bedarf).

Da der Lichtvorhang so positioniert wird, dass ein Eingriff je nach Anforderung bis zu einem bestimmten Wert (Abstand zur Gefahrenstelle) durch den Lichtvorhang erlaubt ist, wird der Reflexionsbereich der Reflexionseinrichtung mit einem erlaubten Versatz zu den Fingerspitzen angebracht. Dieser Versatz zu den Fingerspitzen (Positionierung am Arm, Handrücken, Teilbereich der Finger usw.) lässt sich durch die Laser-Projektionslinie des Linienlasers beginnend bei den Fingerspitzen oder den zugeführten Materialien (Walzpuppe etc.) besser vor Augen führen. Die Bedienperson hat die Kontrolle über die Position zur Auslösebarriere, was bei bisherigen Schutzeinrichtungen nicht möglich war. Dies führt zu einer wesentlich bedienerfreundlichen Funktion dieser Sicherheitseinrichtung mit gleichzeitiger Vermeidung von ungewollten Stopps der Maschinen.

Um die Funktionssicherheit zu gewährleisten, muss sichergestellt werden, dass die geeigneten Reflexionselemente bzw. Reflexionseinrichtungen verwendet werden. Dies wird mit den zwei Sensoreinrichtungen, die mit entsprechendem Abstand zueinander positioniert werden, realisiert. Die Reflexionseinrichtungen werden dazu z. B. mit RFID-Transpondern versehen. Gleichzeitig können die Reflexionsfähigkeiten der Reflexionseinrichtungen durch weitere bzw. erweiterte Sensoreinrichtungen an den gleichen Sensorstellen überprüft werden. Dies erlaubt die Kontrolle sowohl der Verwendung der richtigen Schutzelemente als auch die Überprüfung der Funktionsfähigkeit dieser Schutzelemente.

Um die Maschine freizugeben, müssen die Reflexionselemente gleichzeitig durch die Sensoreinrichtungen erkannt werden. Dabei entspricht diese Funktion einer Zweihandschaltung mit zwei gleichzeitig zu bedienenden Schaltelementen. Eine Überwachung, ob die Reflexionseinrichtungen auch richtig benutzt werden, kann durch die Verwendung von Dehnungs- und Zug-Sensoren oder Pulsmesser bzw. Venendetektor oder dergleichen realisiert werden,

Durch die in diesem Ausführungsbeispiel speziell am Körper (Händen) getragenen Reflexionseinrichtungen als Auslöseelemente, die zudem überwacht und kontrolliert werden, kann eine hohe Sicherheit für gefährliche Maschinen wie Walzwerke gewährleistet werden. Ein einfaches und sicheres Arbeiten lässt sich im Gefahrenbereich ermöglichen und versehentliche Ausfallzeiten der Maschinen werden reduziert.

Im Folgenden wird eine konkrete Lösung detaillierter vorgestellt. Die Sicherungsvorrichtung umfasst ein komplettes Sicherungskonzept, das Fehlauslösungen durch das Handling möglichst vermeidet und Bedienfehler durch falsche oder nicht funktionierende Reflexions-Schutzelemente (Reflexionseinrichtungen) ausschließt.

Die Lage des Schutzbereichs in oder an der Maschine wird durch die manuellen Bedienerfordernisse an der Maschine bestimmt. Diese Lage wird in einem definierten Abstand zur Gefahrenstelle (z. B. Walzenspalt) festgelegt. Abhängig von dieser Lage sind geeignete Reflexionseinrichtungen an den Händen oder Armen erforderlich. Da bei manuellen Bedienfunktionen in der Regel nahe am Schutzbereich gearbeitet werden muss, treten durch den nicht sichtbaren Auslösebereich Fehlabschaltungen auf, die den Betriebsablauf erheblich stören und zu Materialverlusten führen können (Beispiele: bei temperierten Walzwerken verbrennt das Produkt, bei noch pulverförmigen Zuschlagstoffen fällt bei sich automatisch öffnendem Walzenspalt das Produkt durch).

Derartige Fehlauslösungen werden durch die Integration eines Linienlasers, welcher identisch zum Auslösebereich des Lichtvorhangs ausgerichtet ist, vermieden. Der Bediener sieht zu jeder Zeit durch die Projektion der Linie auf den Fingern, der Hand und/oder am Zuführmaterial, wie weit er noch vom Reflexionselement (z.B. Reflexionsarmband) entfernt ist. Damit kann ein unbeabsichtigter Not-Aus mit den entsprechenden negativen Folgen vermieden werden. Mit dieser Einrichtung kann der Schutzbereich sehr genau festgelegt und angezeigt werden. Damit wird im Vergleich zu derzeit bekannten Systemen ein wesentlich verbessertes und leichter bedienbares Sicherheitssystem erreicht.

Die Funktion des Lichtvorhangs wird gegebenenfalls durch eine Prüfung der einzelnen Sensoren des Lichtvorhangs vor Inbetriebnahme der Maschine durchgeführt. Dies erfolgt manuell oder automatisch durch Überfahren der Sensoren mit einer Reflex-Einheit.

Wichtig ist die Überprüfung der Schutzelemente, d.h. der Reflexionseinrichtungen, an den Händen bzw. Armen, um die für die jeweilige Maschine richtigen und funktionsfähigen Schutzelemente zu verwenden. Insbesondere ist dies erforderlich, wenn verschiedene Maschinen mit unterschiedlichen Anforderungen in der Umgebung bedient werden.

Diese Überprüfung erfolgt durch zwei voneinander getrennt, aber mit jeweils einer Hand erreichbaren, positionierten Sensoreinrichtungen. Die Reflexionseinrichtungen sind beispielsweise mit RFID-Transpondern versehen, die eine eindeutige Zuordnung erlauben. Die Sensoreinrichtungen registrieren die Transponder und prüfen gegebenenfalls zusätzlich oder mit einer unmittelbar benachbarten weiteren Sensoreinrichtung die Reflexionsfähigkeit bzw. Reflexion der Reflexionseinrichtungen.

Die Registrierung jeder Anwendung der Reflexionseinrichtungen ist möglich und ein notwendiger Austausch der Reflexionseinrichtungen nach einer maximalen Anwendungszahl definierbar. Eine zusätzlich integrierte Infrarot-Sende- und Empfangszelle sichert die Funktionsfähigkeit durch Prüfung der Reflexion ab. Die gleichzeitig erfolgte Prüfung an den beiden Sensoreinrichtungen sichert die richtige Verwendung der Schutzelemente an beiden Händen/Armen.

Als vorrangiger Einsatzbereich kann die Absicherung von gefährlichen Eingriffsstellen von Maschinen und Anlagen wie Misch-Walzwerke usw. gesehen werden. Allerdings können mit dieser Methode unabhängig vom Personenschutz auch gefährliche Situationen für Maschinen und Anlagen überwacht sowie geschützt werden. Insbesondere können durch diese Sicherungsmaßnahmen auch Roboterarme oder sonstige Handlingseinrichtungen bzw. Förderanlagen überprüft und gesichert werden. Dazu müssen die gefährlichen Situationen definiert und mit diesem System erkennbar gemacht werden.

### BEZUGSZEICHENLISTE:

- 1: Walzen
- 2: Sicherungsvorrichtung
- 3: Gestell
- 4: Gehäuse
- 5: Lichtvorhang
- 6: Lichtstrahlen
- 7: Laserstrahlenfeld
- 8: Reflexionseinrichtung
- 8': Reflexionseinrichtung
- 9: Hände
- 9': Hände
- 10: Sensoreinrichtung
- 10': Sensoreinrichtung
- 11: Reflektorelement
- 12: Linearschlitten
- 13: Einklapp-Reflexelement

## Patentansprüche

1. Sicherungsvorrichtung (2) für eine Maschine aufweisend
- einen Lichtvorhang (5),
- eine erste Sensoreinrichtung (10) und eine zweite Sensoreinrichtung (10') sowie
- eine Steuereinrichtung zum Liefern eines Startsignals für die Maschine und zum Liefern eines Stoppsignals für die Maschine,
**gekennzeichnet durch**
- eine erste und zweite Reflexionseinrichtung (8, 8'), die jeweils ausgebildet sind zum Reflektieren von Licht des Lichtvorhangs (5),
- ein erstes Identifikationselement integriert in die erste Reflexionseinrichtung (8) und ein zweites Identifikationselement integriert in die zweite Reflexionseinrichtung (8'), und **dadurch, dass**
- die erste Sensoreinrichtung (10) zum Auslesen einer ersten Identifikationsinformation des ersten Identifikationselements aus der ersten Reflexionseinrichtung (8) eingerichtet ist,
- die zweite Sensoreinrichtung (10') zum Auslesen einer zweiten Identifikationsinformation des zweiten Identifikationselements aus der zweiten Reflexionseinrichtung (8') eingerichtet ist und
- die Steuereinrichtung eingerichtet ist zum Liefern des Startsignals für die Maschine, nur wenn die erste Sensoreinrichtung (10) die erste Identifikationsinformation und gleichzeitig die zweite Sensoreinrichtung (10') die zweite Identifikationsinformation auslesen, sowie zum Liefern des Stoppsignals für die Maschine, sobald der Lichtvorhang (5) sein von einer der Reflexionseinrichtungen (8, 8') reflektiertes Licht detektiert.

2. Sicherungsvorrichtung (2) nach Anspruch 1,
**dadurch gekennzeichnet, dass**
von der Steuereinrichtung das Startsignal nur geliefert wird, wenn die erste und zweite Identifikationsinformation jeweils einer vorgegebenen Referenzinformation entspricht.

3. Sicherungsvorrichtung (2) nach Anspruch 1 oder 2,
**dadurch gekennzeichnet, dass**
eine Linienlasereinrichtung mit ihrer Strahlrichtung parallel zum Lichtvorhang (5) ausgerichtet ist.

4. Sicherungsvorrichtung (2) nach einem der vorhergehenden Ansprüche,
**dadurch gekennzeichnet, dass**
die erste und zweite Reflexionseinrichtung (8, 8') jeweils ausgebildet sind zum Tragen an einer Extremität einer Bedienperson der Maschine.

5. Sicherungsvorrichtung (2) nach Anspruch 4,
**dadurch gekennzeichnet, dass**
die Reflexionseinrichtungen (8, 8') jeweils als Handschuh, Fingerring oder Armband ausgebildet sind.

6. Sicherungsvorrichtung (2) nach Anspruch 5,
**dadurch gekennzeichnet, dass**
jeder Handschuh oder jedes Armband jeweils mit einem Dehnungssensor, Zugsensor, Pulsmesser oder Venendetektor ausgestattet ist, deren Signale für die Steuereinrichtung ebenfalls notwendige Bedingung sind, damit das Startsignal geliefert wird.

7. Sicherungsvorrichtung (2) nach einem der vorhergehenden Ansprüche,
**dadurch gekennzeichnet, dass**
der Lichtvorhang (5) mit Infrarotlichttechnik realisiert ist und die Reflexionseinrichtungen (8, 8') darauf abgestimmt sind.

8. Sicherungsvorrichtung (2) nach einem der vorhergehenden Ansprüche,
**dadurch gekennzeichnet, dass**
unmittelbar neben der ersten Sensoreinrichtung (10) eine dritte Sensoreinrichtung zum Überprüfen einer Reflexionsfähigkeit der ersten Reflexionseinrichtung (8) und unmittelbar neben der zweiten Sensoreinrichtung (10') eine vierte Sensoreinrichtung zum Überprüfen einer Reflexionsfähigkeit der zweiten Reflexionseinrichtung (8') angeordnet ist.

9. Sicherungsvorrichtung (2) nach einem der vorhergehenden Ansprüche,
**dadurch gekennzeichnet, dass**
die erste Sensoreinrichtung (10), die zweite Sensoreinrichtung (10'), das erste Identifikationselement und das zweite Identifikationselement auf RFID-Technologie basieren.

10. Sicherungsvorrichtung (2) nach einem der vorhergehenden Ansprüche,
**dadurch gekennzeichnet, dass**
von der Steuereinrichtung jedes Detektionsereignis des Lichtvorhangs (5) zählbar ist und ein entsprechendes Zählergebnis bei dem Liefern des Startsignals berücksichtigt wird.

11. Sicherungsvorrichtung (2) nach einem der vorhergehenden Ansprüche,
**dadurch gekennzeichnet, dass**
die Sicherungsvorrichtung (2) ein Reflexelement (11, 13) aufweist, das in einen Strahlengang des Lichtvorhangs zu Prüfzwecken bewegbar ist.

12. Maschine mit einer Sicherungsvorrichtung (2) nach einem der vorhergehenden Ansprüche, wobei ein Schutzbereich der Maschine durch den Lichtvorhang (5) überwacht ist.

13. Maschine nach Anspruch 12, wobei die erste und die zweite Sensoreinrichtung (10, 10') mindestens 20 cm, vorzugsweise mindestens 50 cm voneinander entfernt angeordnet sind.

14. Maschine nach Anspruch 12 oder 13, wobei der Schutzbereich der Maschine an einer betriebsmäßig vorgesehenen Bedienerseite durch einen Linienlaser mit sichtbarem Licht kenntlich gemacht ist.

15. Maschine nach einem der Ansprüche 12 bis 14, die als Walzmaschine, Stanzmaschine, Pressmaschine oder Werkzeugmaschine ausgebildet ist.

16. Verfahren zum Betreiben einer Maschine aufweisend folgende Schritte:
- Beleuchten eines Rands eines Schutzbereichs der Maschine mit einem Lichtvorhang (5),
- Bereitstellen einer ersten Reflexionseinrichtung (8) und einer zweiten Reflexionseinrichtung (8'), wobei
- ein erstes Identifikationselement in die erste Reflexionseinrichtung (8) und ein zweites Identifikationselement in die zweite Reflexionseinrichtung (8') integriert sind,
- Auslesen einer ersten Identifikationsinformation des ersten Identifikationselements aus der ersten Reflexionseinrichtung (8) durch eine erste Sensoreinrichtung (10),
- Auslesen einer zweiten Identifikationsinformation des zweiten Identifikationselements aus der zweiten Reflexionseinrichtung (8') durch eine von der ersten Sensoreinrichtung (10) verschiedene zweite Sensoreinrichtung (10'),
- Detektieren von Licht des Lichtvorhangs (5) nach einer Reflexion an einer der Reflexionseinrichtungen (8, 8') und
- Liefern eines Startsignals für die Maschine, nur wenn das Auslesen der ersten Identifikationsinformation und das Auslesen der zweiten Identifikationsinformation gleichzeitig erfolgen und
- Liefern eines Stoppsignals für die Maschine, sobald das Detektieren des Lichts erfolgt.

## Claims

1. A safety device (2) for a machine, comprising
- a light curtain (5),
- a first sensor device (10) and a second sensor device (10') as well as
- a control device for providing a start signal for the machine and for providing a stop signal for the machine,
**characterized by**
- a first and a second reflection device (8, 8'), which are each formed for reflecting light of the light curtain (5),
- a first identification element integrated in the first reflection device (8) and a second identification element integrated in the second reflection device (8'), and in that
- the first sensor device (10) is configured for reading first identification information of the first identification element out of the first reflection device (8),
- the second sensor device (10') is configured for reading second identification information of the second identification element out of the second reflection device (8'), and
- the control device is configured for providing the start signal for the machine only if the first sensor device (10) reads out the first identification information and the second sensor device (10') reads out the second identification information at the same time, as well as for providing the stop signal for the machine as soon as the light curtain (5) detects its light reflected by one of the reflection devices (8, 8').

2. The safety device (2) according to claim 1,
**characterized in that**
the start signal is provided by the control device only if the first and the second identification information each correspond to preset reference information.

3. The safety device (2) according to claim 1 or 2,
**characterized in that**
a line laser device is oriented parallel to the light curtain (5) with its beam direction.

4. The safety device (2) according to any one of the preceding claims,
**characterized in that**
the first and the second reflection device (8, 8') are each formed for wearing at a limb of an operator of the machine.

5. The safety device (2) according to claim 4,
**characterized in that**
the reflection devices (8, 8') are each formed as a glove, finger ring or bracelet.

6. The safety device (2) according to claim 5,
**characterized in that**
each glove or each bracelet is respectively equipped with an expansion sensor, tension sensor, pulse tracker or vein detector, the signals of which are also a required condition for the control device in order that the start signal is provided.

7. The safety device (2) according to any one of the preceding claims,
**characterized in that**
the light curtain (5) is realized with infrared light technology and the reflection devices (8, 8') are adapted thereto.

8. The safety device (2) according to any one of the preceding claims,
**characterized in that**
a third sensor device for examining a reflecting capacity of the first reflection device (8) is arranged immediately next to the first sensor device (10) and a fourth sensor device for examining a reflecting capacity of the second reflection device (8') is arranged immediately next to the second sensor device (10').

9. The safety device (2) according to any one of the preceding claims,
**characterized in that**
the first sensor device (10), the second sensor device (10'), the first identification element and the second identification element are based on RFID technology.

10. The safety device (2) according to any one of the preceding claims,
**characterized in that**
each detection event of the light curtain (5) is countable by the control device and a corresponding counting result is taken into account in providing the start signal.

11. The safety device (2) according to any one of the preceding claims,
**characterized in that**
the safety device (2) comprises a reflection element (11, 13), which is movable into a beam path of the light curtain for examination purposes.

12. A machine with a safety device (2) according to any one of the preceding claims, wherein a protection area of the machine is monitored by the light curtain (5).

13. The machine according to claim 12, wherein the first and the second sensor device (10, 10') are arranged at least 20 cm, preferably at least 50 cm apart from each other.

14. The machine according to claim 12 or 13, wherein the protection area of the machine is indicated by a line laser with visible light on an operationally provided operator side.

15. The machine according to any one of claims 12 to 14, which is formed as a rolling machine, punching machine, pressing machine or machine tool.

16. A method for operating a machine comprising the following steps:
- illuminating a border of a protection area of the machine with a light curtain (5),
- providing a first reflection device (8) and a second reflection device (8'), wherein
- a first identification element is integrated in the first reflection device (8) and a second identification element is integrated in the second reflection device (8'),
- reading first identification information of the first identification element out of the first reflection device (8) by a first sensor device (10),
- reading second identification information of the second identification element out of the second reflection device (8') by a second sensor device (10') different from the first sensor device (10),
- detecting light of the light curtain (5) after reflection on one of the reflection devices (8, 8') and
- providing a start signal for the machine only if reading out the first identification information and reading out the second identification information are effected at the same time, and
- providing a stop signal for the machine as soon as the detection of the light is effected.

## Revendications

1. Dispositif de sécurité (2) destiné à une machine, ledit dispositif comportant
- un rideau lumineux (5),
- une première unité de détection (10) et une deuxième unité de détection (10') et
- une unité de commande destinée à fournir un signal de démarrage de la machine et à fournir un signal d'arrêt de la machine,
**caractérisé par**
- des première et deuxième unités de réflexion (8, 8') qui sont chacune conçues pour réfléchir de la lumière du rideau lumineux (5),
- un premier élément d'identification intégré dans la première unité de réflexion (8) et un deuxième élément d'identification intégré dans la deuxième unité de réflexion (8'), et en ce que
- la première unité de détection (10) est conçue pour lire une première information d'identification du premier élément d'identification dans la première unité de réflexion (8),
- la deuxième unité de détection (10') est conçue pour lire une deuxième information d'identification du deuxième élément d'identification dans la deuxième unité de réflexion (8') et
- l'unité de commande est conçue pour fournir le signal de démarrage de la machine uniquement lorsque la première unité de détection (10) lit la première information d'identification et en même temps la deuxième unité de détection (10') lit la deuxième information d'identification, ainsi que pour fournir le signal d'arrêt de la machine dès que le rideau lumineux (5) détecte sa lumière réfléchie par l'une des unités de réflexion (8, 8').

2. Dispositif de sécurité (2) selon la revendication 1, **caractérisé en ce que**
le signal de démarrage n'est fourni par l'unité de commande que si les première et deuxième informations d'identification correspondent chacune à une information de référence prédéterminée.

3. Dispositif de sécurité (2) selon la revendication 1 ou 2,
**caractérisé en ce que**
une unité laser linéaire est orientée de sorte que sa direction de faisceau soit parallèle au rideau lumineux (5) .

4. Dispositif de sécurité (2) selon l'une des revendications précédentes,
**caractérisé en ce que**
les première et deuxième unités de réflexion (8, 8') sont chacune conçues pour être portées à une extrémité d'un opérateur de la machine.

5. Dispositif de sécurité (2) selon la revendication 4,
**caractérisé en ce que**
les unités de réflexion (8, 8') sont conçues sous la forme d'un gant, d'une bague ou d'un bracelet.

6. Dispositif de sécurité (2) selon la revendication 5,
**caractérisé en ce que**
chaque gant ou chaque bracelet est équipé d'un capteur de dilatation, d'un capteur de traction, d'un pulsomètre ou d'un détecteur de veine, dont les signaux sont également une condition nécessaire pour que l'unité de commande délivre le signal de démarrage.

7. Dispositif de sécurité (2) selon l'une des revendications précédentes,
**caractérisé en ce que**
le rideau lumineux (5) est réalisé avec une technologie de lumière infrarouge et les unités de réflexion (8, 8') sont adaptés à celui-ci.

8. Dispositif de sécurité (2) selon l'une des revendications précédentes,
**caractérisé en ce que**
une troisième unité de détection destinée à vérifier la capacité de réflexion de la première unité de réflexion (8) est disposée directement à côté de la première unité de détection (10) et une quatrième unité de détection destinée à surveiller la capacité de réflexion de la deuxième unité de réflexion (8') est disposée directement à côté de la deuxième unité de détection (10').

9. Dispositif de sécurité (2) selon l'une des revendications précédentes,
**caractérisé en ce que**
la première unité de détection (10), la deuxième unité de détection (10'), le premier élément d'identification et le deuxième élément d'identification sont basés sur la technologie RFID.

10. Dispositif de sécurité (2) selon l'une des revendications précédentes,
**caractérisé en ce que**
chaque événement de détection du rideau lumineux (5) peut être compté par l'unité de commande et un résultat de comptage correspondant est pris en compte lors de la fourniture du signal de démarrage.

11. Dispositif de sécurité (2) selon l'une des revendications précédentes,
**caractérisé en ce que**
le dispositif de sécurité (2) comporte un élément réfléchissant (11, 13) qui peut être déplacé dans un trajet de faisceau du rideau lumineux à des fins de test.

12. Machine comprenant un dispositif de sécurité (2) selon l'une des revendications précédentes, une zone de protection de la machine étant surveillée par le rideau lumineux (5).

13. Machine selon la revendication 12, les première et deuxième unités de détection (10, 10') étant disposées à au moins 20 cm, de préférence à au moins 50 cm, l'une de l'autre.

14. Machine selon la revendication 12 ou 13, la zone de protection de la machine étant matérialisée par un laser linéaire à lumière visible sur un côté opérateur prévu de manière fonctionnelle.

15. Machine selon l'une des revendications 12 à 14, qui est conçue comme une machine à laminer, une machine à estamper, une machine à presser ou une machine-outil.

16. Procédé de fonctionnement d'une machine, ledit procédé comprenant les étapes suivantes :
- éclairer un bord d'une zone de protection de la machine avec un rideau lumineux (5),
- fournir une première unité de réflexion (8) et une deuxième unité de réflexion (8'),
- un premier élément d'identification étant intégré dans la première unité de réflexion (8) et un deuxième élément d'identification étant intégré dans la deuxième unité de réflexion (8'),
- lire une première information d'identification du premier élément d'identification dans la première unité de réflexion (8) à l'aide d'une première unité de détection (10),
- lire une deuxième information d'identification du deuxième élément d'identification dans la deuxième unité de réflexion (8') à l'aide d'une deuxième unité de détection (10') différente de la première unité de détection (10),
- détecter de la lumière du rideau lumineux (5) après réflexion sur l'une des unités de réflexion (8, 8') et
- fournir un signal de démarrage de la machine uniquement si la lecture de la première information d'identification et la lecture de la deuxième information d'identification sont effectuées simultanément et
- fournir un signal d'arrêt de la machine dès que la lumière est détectée.
